# FASCICULE DE BREVET EUROPEEN

(11) **EP 2 211 391 B1**
(45) Date de publication et mention de la délivrance du brevet: **27.09.2017**
(21) Numéro de dépôt: 10350001.3
(22) Date de dépôt: 08.01.2010
(51) Int. Cl.: H02S 20/23

(54) **Installation de panneaux photovoltaïques**
Anlage mit Photovoltaikmodulen
Installation of photovoltaic panels

(30) Priorité: 26.01.2009 FR 0900312
(43) Date de publication de la demande: 28.07.2010
(73) Titulaire: Systovi, 44608 St Herblain (FR)
(72) Inventeur: Janot, Pascal, 44000 Nantes (FR); Ducrot, Olivier, 44100 Nantes (FR); Benabdelkarim, Mohamed, 44000 Nantes (FR)
(74) Mandataire: Tournel, Jean Louis

(56) Documents cités:
- EP-A- 1 035 591
- DE-U1-202005 015 455
- FR-A- 2 915 217

## Description

L'invention se rapporte à une installation de panneaux photovoltaïques pour toiture.

La puissance électrique d'une installation de panneaux photovoltaïque dépend du nombre de panneaux et donc de la surface productrice recevant la lumière.

Beaucoup d'utilisateurs utilisent la surface de leur toiture comme support de panneaux photovoltaïques.

En France, la législation a prévu de rémunérer le courant produit différemment si les panneaux sont fixés au dessus de la toiture existante ou intégrés dans la toiture. Cette dernière solution étant plus rémunératrice, le montage intégré à la toiture est le plus souvent utilisé.

Selon cette dernière solution, après avoir retiré les tuiles ou les ardoises, on pose une sous toiture pour obtenir l'étanchéité et sur cette sous toiture on vient fixer les panneaux sur des rails préalablement posés et fixés. Il faut donc procéder au montage de la sous toiture puis au montage des rails et enfin au montage des panneaux sur les rails.

On connait un panneau FR A 2 465 615 dont la surface active est logée dans un cadre lequel présente latéralement des profilés male/ femelle qui s'emboitent selon une direction orthogonale au plan du cadre pour former un recouvrement. Ainsi, le profilé du haut présente une partie femelle sous la forme d'un U ouvert vers le haut (rainure pièce femelle) tandis que le profilé du bas comporte un U retourné (ouvert vers le bas) formant pièce mâle qui peut donc se loger partiellement dans le U ouvert vers le haut d'un panneau situé immédiatement en dessous. Les profiles droit et gauche sont similaires en leurs moyens afin de constituer des moyens de recouvrement par emboitement selon une direction perpendiculaire au plan du panneau. Avec ce type de panneau se pose le problème de l'écoulement de l'eau lorsqu'il y a de fortes pluies. En effet, une partie de l'eau doit s'écouler dans les rainures occupées partiellement par les branches du U de la pièce mâle qui vient en recouvrement et cela génère donc des fuites car l'eau déborde des rainures et s'infiltre sous le panneau par le phénomène de la goutte d'eau.

La jonction des profilés aux quatre coins se fait par une coupe biaise ce qui génère des fuites. *On connait également Fr 2915217 comprenant des moyens d'emboitement et Ep 1035 591 comprenant des pattes d'appui sur des profilés transversaux.* Le but est donc de limiter ces problèmes.

A cet effet, l'invention a pour objet un panneau photovoltaïque selon l'objet de la revendication 1 et une installation d'un tel panneau photovoltaïque selon la revendication 8. L'invention sera bien comprise à l'aide de la description ci après faite à titre d'exemple en regard du dessin qui représente schématiquement :

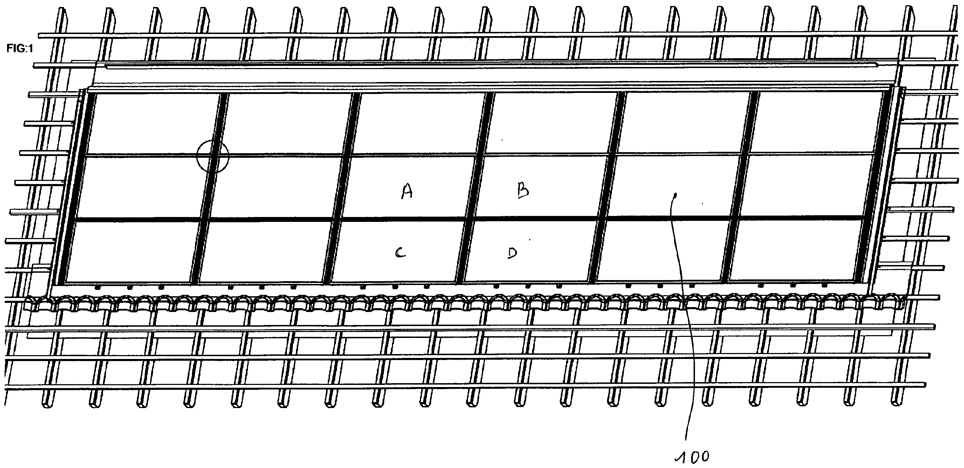

FIG 1 : Une vue d'une installation de panneaux en perspective
FIG 2 : Un détail de la figure 1
FIG 3 : Une coupe transversale de deux panneaux cote à cote montés.

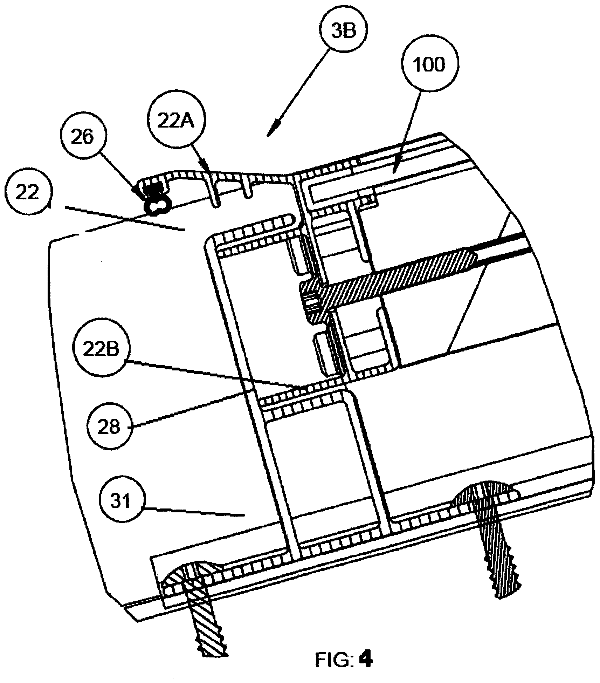

FIG 4 : Une coupe selon le sens de la pente d'une variante de panneaux au niveau du panneau du bas.
FIG 5 : Une coupe selon le sens de la pente d'une variante de panneaux au niveau de la jonction entre deux panneaux.

En se reportant au dessin, on voit une installation 1 de production d'électricité composée de plusieurs panneaux A,B,C,D photovoltaïques disposés selon deux directions (horizontale et verticale).Cette installation ne nécessite pas de sous toiture. Les panneaux sont quadrangulaires (carrés ou rectangulaires). Le panneau est porté par un cadre 2 comprenant des moyens 3A, 3B de recouvrement avec un autre panneau. Le cadre porte la surface 100 de réception de la lumière.

Les bords haut et bas sont ceux qui sont horizontaux lorsqu'ils sont montés sur un toit, les deux autres bords seront appelés droit et gauche.

Selon l'invention, d'une part, seuls les bords haut et bas du panneau sont pourvus de moyens 3A, 3B de recouvrement et, d'autre part, les bords latéraux droit et gauche du panneau sont pourvus d'un profilé 4 latéral comprenant une âme 4A sensiblement orthogonale à la surface 100 de réception dudit panneau et une patte 4B d'appui destinée à prendre appui sur un profilé 5 dit d'appui fixé sur la charpente avec lequel il va former une gouttière.

La patte 4B d'appui parallèle à la surface de réception se situe sous la face supérieure du panneau. De préférence, elle se situe sous la face inférieure dudit panneau et elle prend appui sur le profilé d'appui 5.

L'âme 4A verticale va former une face latérale d'une gouttière 50 .

La gouttière 50 sera formée par deux âmes verticales 4A de deux panneaux cote à cote et de la surface 5A supérieure du profilé 5 dit d'appui.

Les moyens 3A, 3B de recouvrement par emboitement s'étendent sur toute la largeur du panneau de sorte que les panneaux montés l'eau éventuellement recueillie dans les gorges des moyens de recouvrement peut s'écouler directement dans la gouttière 50 .L'emboitement se fait par déplacement d'un panneau vers l'autre panneau dans un plan perpendiculaire à la toiture.

Ces moyens de recouvrement débouchent latéralement au niveau du plan passant par la face latérale externe de l'âme 4A du profilé 4 latéral.

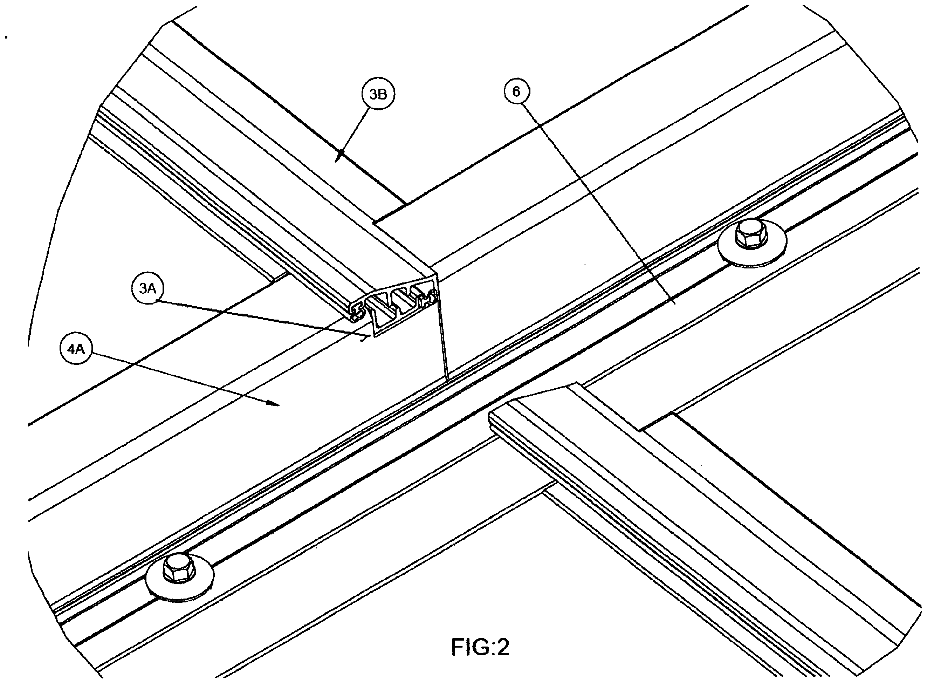

Dans une forme de réalisation figure2 , les moyens de recouvrement haut et bas sont conçus pour former une chicane évitant que l'eau remonte sous l'effet du vent.

Ici (figure 2), on a prévu deux chicanes formées par emboitement de deux nervures dans deux rainures. Eventuellement une des parois de la rainure peut porter un joint qui vient en appui dans le fond du U du profilé mâle.

On notera que le profilé bas porte une aile sensiblement parallèle à la surface de réception du panneau venant au dessus de la surface de réception du panneau situé sous ledit panneau considéré. Cela permet à l'eau de s'écouler sur le panneau inférieur (sur la figure 2 , le haut se trouve à droite).

La patte 4B horizontale du profilé latéral 4 va servir à la fixation du panneau qui se fait sur la gouttière 5.

Pour cela, on utilise, un profilé 6 de fixation comportant des joints 7,8 s'étendant le long de l'axe du profilé et venant appliquer la patte 4B horizontale sur le fond du profilé d'appui 5.Ce profilé de fixation forme une bride.

Les vis qui servent à plaquer la bride sont en appui sur la bride 6 via un joint.

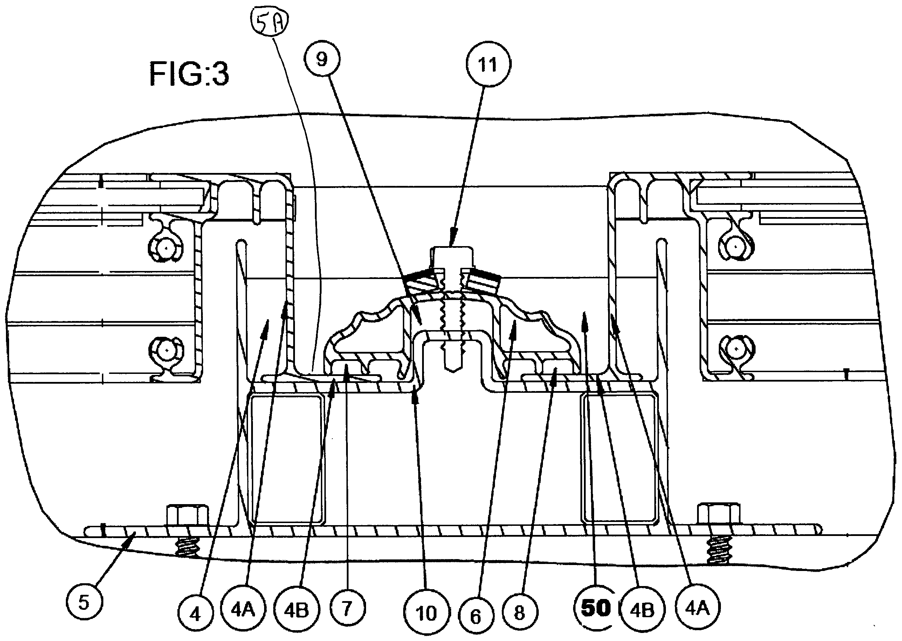

On a représenté un profilé de fixation à quatre joints (les joints 7,8 ne sont pas mis en place sur la figure3) mais deux peuvent être suffisant.

On notera que ces joints sont préservés du soleil donc auront une durée de vie plus longue. Ces joints servent également à la dilatation.

Avantageusement, le fond de la gouttière et le profilé de fixation comporte des moyens 9,10 de positionnement respectif permettant de centrer et/ou de caler latéralement le profilé de fixation. C'est à ce niveau que l'on va utiliser des vis 11 auto-taraudeuses pour visser le profilé 6 de fixation.

On voit que le profilé 6 de fixation comporte une paroi supérieure courbe et une paroi inférieure qui présente des rainures pour recevoir des joints ainsi qu'une rainure 9 centrale qui constitue une des deux fractions complémentaires 9,10 des moyens de positionnement.

La gouttière est constituée, ici par le fond de la feuillure supérieure d'un profilé en H et des âmes verticales 4A , le pied du H comportant des ailes 12 pour sa fixation sur la charpente au moyen de clous ou vis. Un voile relie les deux pieds du H

En dimensionnant suffisamment la largeur et la profondeur de la gouttière, on obtient une évacuation correcte de l'eau sans reflux.

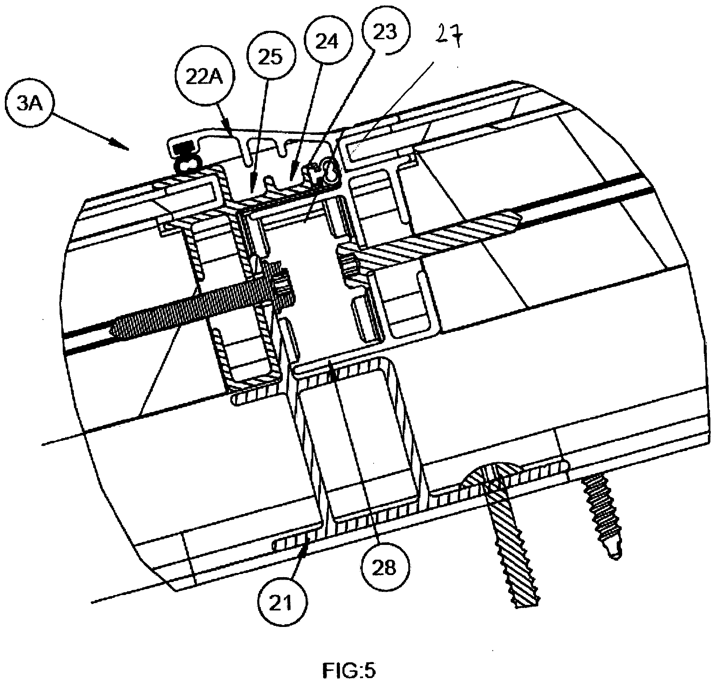

Avantageusement isolément ou en combinaison avec le profilé latéral, on a conçu des moyens de recouvrement par emboitement (figure 3,5) permettant de venir s'accrocher directement ou indirectement sur la charpente.

On voit qu'ici que c'est la fraction 3A des moyens de recouvrement par emboitement qui équipe le bord supérieur du panneau qui comportent une patte 21 de fixation traversée par une vis.

L'emboitement du bas du panneau avec le haut d'un autre panneau se fait cette fois ci selon une direction sensiblement parallèle au plan dudit panneau.

Le bas du panneau présente une feuillure 22 délimitée par deux ailes 22A et 22B recevant une partie mâle 23 portée par l'autre panneau. Cette partie mâle 23 est conformée pour constituer au moins un canal 24 apte à canaliser l'eau éventuellement infiltrée sous l'effet du vent. Ici, il est prévu deux canaux portés par une aile 25.

Une 22B des ailes de la feuillure à savoir l'aile inférieure 22B forme une pièce mâle qui s'emboite dans une gorge 28 du profilé équipant le bord inférieur du panneau.

L'aile 22 A supérieure de la feuillure se prolonge suffisamment pour venir recouvrir le bord haut du panneau. Un joint 26 est prévu pour empêcher l'eau de s'infiltrer en remontant la pente sous l'effet du vent. Il peut être compléter par un second joint 27 positionné entre une paroi du canal 24 et la face inférieure de l'aile 22A supérieure de la feuillure.

Cette patte 21 d'accrochage combinée avec le mode d'emboitement évite que le panneau se soulève. le panneau est donc fixé sur la charpente au niveau de ses quatre cotés.

On voit que pour le dernier panneau situé en bas du toit, il a été prévu un profilé spécial 31 qui est fixé sur la charpente et qui présente une gorge 28.

Pour le panneau du haut, il est prévu une pièce spéciale pour le raccord avec la toiture.

## Revendications

1. Panneau photovoltaïque quadrangulaire comprenant une surface (100) de réception de la lumière portée par un cadre (2) pourvu de moyens (3A, 3B) de recouvrement par emboitement avec un autre panneau photovoltaïque **caractérisé en ce que**,
d'une part, seuls les bords haut et bas du panneau sont pourvus de moyens de recouvrement et, d'autre part, les bords latéraux droit et gauche du panneau sont pourvus d'un profilé (4)latéral comprenant une âme orthogonale (4A) à la surface de réception et une patte (4B) d'appui *laquelle âme orthogonale forme une face latérale* d'une gouttière (50).

2. Panneau photovoltaïque selon la revendication 1 **caractérisée en ce que** les moyens (3A), 3B de recouvrement s'étendent sur toute la largeur du panneau de sorte que le panneau monté l'eau éventuellement recueillie dans des gorges des moyens de recouvrement peut s'écouler directement dans la gouttière (50).

3. Panneau photovoltaïque selon la revendication 1 ou 2 **caractérisé en ce que** la patte (4B) d'appui parallèle à la surface de réception se situe sous la face supérieure du panneau.

4. Panneau photovoltaïque selon la revendication 3 **caractérisée en ce que** la patte d'appui (4B) se situe sous la face inférieure dudit panneau.

5. Panneau photovoltaïque selon l'une quelconque des revendications précédentes **caractérisé en ce que** les moyens de recouvrement présentent une patte (21) de fixation sur la charpente.

6. Panneau photovoltaïque selon la revendication 5 **caractérisé en ce que** la patte (21) de fixation sur la charpente est portée par la fraction des moyens d'emboitement équipant le bord haut du panneau.

7. Panneau photovoltaïque selon l'une quelconque des revendications 1 à 6 **caractérisé en ce que** l'emboitement se fait selon une direction sensiblement parallèle au plan du panneau.

8. Installation de panneaux photovoltaïques disposés selon deux directions **caractérisée en ce qu'**elle est constituée par des panneaux conformes à l'une quelconque des revendications 1 à 7.

9. Installation de panneaux photovoltaïques selon la revendication 8 **caractérisée en ce qu'**il est formé entre deux panneaux cote à cote une gouttière (50) laquelle est formée par deux âmes verticales (4A) de deux panneaux cote à cote et de la surface supérieure d'un profilé (5) dit d'appui.

10. Installation de panneaux photovoltaïques selon la revendication 9 **caractérisée en ce qu'**elle comprend un profilé (6) de fixation comportant des joints (7,8) s'étendant le long de l'axe du profilé et venant appliquer une patte (4B) d'appui sur le profilé d'appui (5).

11. Installation de panneaux photovoltaïques selon la revendication 10 **caractérisée en ce que** le fond de la gouttière et le profilé de fixation comporte des moyens (9,10) de positionnement respectif permettant de centrer et/ou de caler latéralement le profilé de fixation.

12. Installation de panneaux photovoltaïques selon la revendication 10 ou 11 **caractérisée en ce que** le profilé (6) de fixation comporte une paroi supérieure courbe et une paroi inférieure qui présente des rainures pour recevoir des joints ainsi qu'une rainure (9) centrale qui constitue une des deux fractions complémentaires des moyens de positionnement.

13. Installation de panneaux photovoltaïques selon la revendication 9 **caractérisée en ce que** le profilé (5) d'appui est un profilé en H, le pied du H comportant des ailes (12) pour sa fixation sur la charpente au moyen de clous ou vis.

14. Installation de panneaux photovoltaïques selon l'une quelconque des revendications 8 à 13 **caractérisé en ce que** les moyens de recouvrement par emboitement sont fixés au moins indirectement sur la charpente par des pattes (21) de fixation.

## Patentansprüche

1. Viereckiges Solarzellenpaneel umfassend eine Oberfläche (100) zum Empfang von Licht, das von einem Rahmen (2) getragen wird, der mit einem anderen Solarzellpaneel ineinandergreifende Abdeckungsmittel (3A, 3B) aufweist,
**dadurch gekennzeichnet,**
**dass** zum einen nur der obere Rand und der untere Rand des Paneels mit Abdeckungsmitteln ausgestattet sind und zum anderen der rechte und der linke Seitenrand des Paneels mit einem seitlichen Profil (4) ausgestattet sind, das einen senkrechten Kern (4A) an einer Empfangsoberfläche und eine Stützlasche (4B) umfasst, wobei dieser senkrechte Kern eine seitliche Fläche einer Rinne (50) ausbildet.

2. Solarzellenpaneel nach Anspruch1, **dadurch gekennzeichnet, dass** sich die Abdeckungsmittel (3A, 3B) über die ganze Länge des Paneels erstrecken, so dass bei montiertem Paneel das in den Rillen der Abdeckungsmittel angesammelte Wasser direkt in die Rinne (50) fliessen kann.

3. Solarzellenpaneel nach Anspruch 1 oder 2, **dadurch gekennzeichnet, dass** die Stützlasche (4B), die sich parallel zur Empfangsoberfläche erstreckt, unter der oberen Fläche des Paneels liegt.

4. Solarzellenpaneel nach Anspruch 3, **dadurch gekennzeichnet, dass** die Stützlasche (4B) unter der unteren Fläche dieses Paneels liegt.

5. Solarzellenpaneel nach einem der vorangehenden Ansprüche, **dadurch gekennzeichnet, dass** die Abdeckungsmittel eine Lasche (21) zur Befestigung am Grundgerüst aufweisen.

6. Solarzellenpaneel nach Anspruch 5, **dadurch gekennzeichnet, dass** die Lasche (21) zur Befestigung am Grundgerüst durch den Teil der ineinander greifenden Mittel getragen wird, die den oberen Rand des Paneels ausrüsten.

7. Solarzellenpaneel nach einem der Ansprüche 1 bis 6, **dadurch gekennzeichnet, dass** das Ineinandergreifen in einer Richtung erfolgt, die im Wesentlichen parallel zur Ebene des Paneels ist.

8. Anlage mit Solarzellpaneelen, die in zwei Richtungen angeordnet sind, **dadurch gekennzeichnet, dass** sie aus Paneelen besteht, die nach einem der Ansprüche 1 bis 7 gebildet sind.

9. Anlage mit Solarzellpaneelen nach Anspruch 8, **dadurch gekennzeichnet, dass** sie aus zwei benachbarten Panneelen und aus einer Rinne (50) besteht, die aus zwei vertikalen Kernen (4A) von zwei benachbarten Paneelen und der oberen Oberfläche eines sogenannten Stützprofils (5) gebildet ist.

10. Anlage mit Solarzellpaneelen nach Anspruch 9, **dadurch gekennzeichnet, dass** sie ein Befestigungsprofil (6) aufweist, mit sich entlang der Achse des Profils erstreckenden Dichtungen (7, 8), die eine Stützlasche (4B) gegen das Stützprofil (5) pressen.

11. Anlage mit Solarzellpaneelen nach Anspruch 10, **dadurch gekennzeichnet, dass** der Boden der Rinne und das Befestigungsprofil zum Zentrieren und/oder zum seitlichen Ausrichten des Befestigungsprofils jeweilige Positionierungsmittel (9, 10) aufweisen.

12. Anlage mit Solarzellpaneelen nach Anspruch 10 oder 11, **dadurch gekennzeichnet, dass** das Befestigungsprofil (6) eine gebogene obere Wand und eine untere Wand enthält, die Nuten zur Aufnahme von Dichtungen aufweist und auch eine zentrale Nut (9), die einen der beiden komplementären Teile der Positionierungsmittel ausbildet.

13. Anlage mit Solarzellpaneelen nach Anspruch 9, **dadurch gekennzeichnet, dass** das Stützprofil (5) H-förmig ist, wobei der Fuß des H zu seiner Befestigung am Grundgerüst durch Nägel oder Schrauben Flügel (12) aufweist.

14. Anlage mit Solarzellpaneelen nach einem der Ansprüche 8 bis 13, **dadurch gekennzeichnet, dass** die ineinandergreifenden Abdeckungsmittel mindestens indirekt am Grundgerüst durch Befestigungslaschen (21) befestigt sind.

## Claims

1. Quadrangular photovoltaic panel comprising a light-receiving surface (100) carried by a frame (2) equipped with means (3A, 3B) for covering by interlocking with another photovoltaic panel,
**characterized in that**,
on the one hand, only the upper and lower edges of the panel are equipped with covering means, and, on the other hand, the right and left lateral edges of the panel are equipped with a lateral structural section (4) comprising a web (4A) orthogonal to the receiving surface and a bearing foot (4B), the orthogonal web forming a lateral face of a gutter (50).

2. Photovoltaic panel according to Claim 1, **characterized in that** the covering means (3A, 3B) extend over the whole width of the panel in such a way that, when the panel is fitted, any water collected in the channels of the covering means can flow directly into the gutter (50).

3. Photovoltaic panel according to Claim 1 or 2, **characterized in that** the bearing foot (4B) parallel to the receiving surface is located under the upper face of the panel.

4. Photovoltaic panel according to Claim 3, **characterized in that** the bearing foot (4B) is located under the lower face of said panel.

5. Photovoltaic panel according to any of the preceding claims, **characterized in that** the covering means have a foot (21) for fastening to the framework.

6. Photovoltaic panel according to Claim 5, **characterized in that** the foot (21) for fastening to the framework is carried by the portion of the interlocking means fitted on the upper edge of the panel.

7. Photovoltaic panel according to any of Claims 1 to 6, **characterized in that** the interlocking takes place in a direction substantially parallel to the plane of the panel.

8. Installation of photovoltaic panels arranged in two directions, **characterized in that** it is formed by panels according to any of Claims 1 to 7.

9. Installation of photovoltaic panels according to Claim 8, **characterized in that** a gutter (50) is formed between two panels placed side-by-side, the gutter being formed by two vertical webs (4A) of two panels placed side-by-side and the upper surface of a structural section (5) called the bearing structural section.

10. Installation of photovoltaic panels according to Claim 9, **characterized in that** it comprises a fastening structural section (6), comprising gaskets (7, 8) extending along the axis of the structural section for the application of a bearing foot (4B) to the bearing structural section (5).

11. Installation of photovoltaic panels according to Claim 10, **characterized in that** the base of the gutter and the fastening structural section comprise respective positioning means (9, 10) enabling the fastening structural section to be centred and/or secured laterally.

12. Installation of photovoltaic panels according to Claim 10 or 11, **characterized in that** the fastening structural section (6) comprises a curved upper wall and a lower wall which has grooves for receiving gaskets, as well as a central groove (9) which forms one of the two complementary portions of the positioning means.

13. Installation of photovoltaic panels according to Claim 9, **characterized in that** the bearing structural section (5) is a structural H-section, the foot of the H comprising flanges (12) for fastening to the framework by means of nails or screws.

14. Installation of photovoltaic panels according to any of Claims 8 to 13, **characterized in that** the means for covering by interlocking are fastened at least indirectly to the framework by fastening feet (21).
